# EUROPÄISCHE PATENTSCHRIFT

(11) **EP 0 738 652 B1**
(45) Veröffentlichungstag und Bekanntmachung des Hinweises auf die Patenterteilung: **03.06.1998**
(21) Anmeldenummer: 96104320.5
(22) Anmeldetag: 19.03.1996
(51) Int. Cl.: B62D 65/00, B65G 37/02

(54) **Kostenmässig und logistisch optimiertes Montagewerk für die Serienmontage industrieller Erzeugnisse, insbesondere von Fahrzeugen**
Cost and logistically optimized assembling plant for serial assembly of industrial products, especially for vehicles
Installation d'assemblage optimisée au coût et à la logistique pour le montage à la chaîne de produits industriels, en particulier de véhicules

(30) Priorität: 20.04.1995 DE 19514594
(43) Veröffentlichungstag der Anmeldung: 23.10.1996
(73) Patentinhaber: MC Micro Compact Car Aktiengesellschaft, 2500 Biel 4 (CH)
(72) Erfinder: Tomforde, Johann, 71069 Sindelfingen (DE); Gross, Wilfried, 71272 Renningen (DE); Riehl, Jürgen, 70372 Stuttgart (DE)
(74) Vertreter: Weiss, Klaus

(56) Entgegenhaltungen:
- EP-A- 0 430 739
- GB-A- 1 412 458
- REVUE AUTOMOBILE, Bd. 84, Nr. 27, 29.Juni 1989, BERNE CH, Seite 9 XP000107080 DENIS ROBERT: "Les conditions de travail du troisième millénaire."

## Beschreibung

Die Erfindung geht aus von einem Montagewerk für die Serienmontage industrieller Erzeugnisse, insbesondere von Fahrzeugen nach dem Oberbegriff von Anspruch 1, wie es heute in der industriellen Fertigung, beispielsweise auch im Automobilbau allgemein üblich ist.

Bei diesen Montagewerken verläuft die Montagelinie in mehreren U-förmigen Schleifen, die alle parallel zueinander verlaufen und unmittelbar nebeneinander liegen. Dieses konventionelle Layout eines Montagewerkes bietet den Vorteil eines geringen Fördertechnikaufwandes für die Rückführung der Montageskids vom Linienende zum Linienanfang zurück. Wegen der kompakten Anordnung der Einzelabschnitte der Montagelinie ist auch eine gute Kommunikation zwischen diesen Abschnitten möglich. Ferner ist ein günstiges Verhältnis von Fassadenlänge zu erforderlicher Grundfläche vorteilhaft. Im übrigen können die kistenweise in zahlenmäßig großen Vorräten an die Montagelinie anlieferbaren Kleinteile über die Fahrstraßen zwischen den Abschnitten der Montagelinien an die Montageplätze angeliefert werden. Schwierig gestaltet sich jedoch die logistische Anbindung der komplexeren, "just in Time" anzuliefernden Teile. Die hierfür erforderlichen Fördersysteme sind bei einem solchen kompakten Layout sehr aufwendig, weil eine bodengestützte Förderung derartiger Großteile nicht mehr möglich ist. Es lassen sich nur teure und kostspielig installierbare Großteil-Hängeförderer einsetzen, die zudem wenig flexibel für nachträgliche Änderungen bezüglich des Zielortes sind.

Aufgabe der Erfindung ist es, das gattungsgemäß zugrundegelegte Montagewerk logistisch sowie funktions- und kostenmäßig zu optimieren.

Diese Aufgabe wird bei Zugrundelegung des gattungsgemäßen Montagewerkes erfindungsgemäß durch die kennzeichnenden Merkmale von Anspruch 1 gelöst. Aufgrund der gefächerten, vorzugsweise kreuzweisen Anordnung der Förderschleifen der Montagelinie können in die zwischen den Montagelinien geschaffenen Freiräume Zulieferbetriebe für einzubauende Komponenten untergebracht werden. Dadurch ergeben sich kurze Zugangswege von den Zuliefebetrieben zu der Hauptmontagelinie. Trotzdem sind innerhalb Hauptmontagelinie die Kommunikationswege recht kurz und für den Rücklauf der leeren Skids brauchen keine gesonderten Fördereinrichtungen installiert zu werden. Komplexere Großteile können quer zu einem Abschnitt der Montagelinie am Boden angeliefert werden, was lediglich einfache, bodengestützte und funktionsflexible Fördermittel voraussetzt. Der Zielort für die Anlieferung derartiger Teile kann ohne großen Umrüstaufwand bedarfsweise verändert werden.

Die Vorteile der erfindungsgemäßen Ausgestaltung des Montagewerkes liegen darin, daß alle folgenden Punkte kumulativ erfüllt werden können; bekannte Alternativlösungen erreichen hier nur Teilerfüllungen der Vorteilspunkte:
▷ Kurze Kommunikationswege innerhalb der Hauptmontagelinie,
▷ kurze Zubringungswege für die Klein- und Normteile sowie Teile mittlerer Größe zu den diversen, verstreut liegenden Montageplätzen von den zentral liegenden Stirnseiten der Förderschleifen her oder von seitlichen Stellplätzen für Nfz-Wechselaufbauten aus,
▷ für den Fall einer Kapazitätserweiterung des Montagewerkes, d.h. einer Erhöhung der Jahresproduktion, kann die Montagelinie ohne große Umstände, ohne Beienträchtigung der separaten Montagehallen der Erzeugniskomponenten und ohne Produktionsunterbrechung an der Hauptmontagelinie durch Anbau an den freien Enden der Förderschleifen erweitert werden,
▷ geringer Fördertechnikaufwand und Platzbedarf für die Rückführung der leeren Skids oder Hängeförderer vom Ende der Montagelinie zu deren Anfang hin,
▷ kurze logistische Anbindung der separaten Montagehallen an den jeweils gewünschten Montageplatz der Hauptmontagelinie,
▷ kurze Kommunikationswege zwischen der Hauptmontagelinie einerseits und den separaten Montagehallen andererseits,
▷ flexible Unterbringung der separaten Montagehallen zwischen den jeweiligen Förderschleifen der Hauptmontagelinie, d.h. für den Fall einer Kapazitätserweiterung der Hauptmontagelinie können auch die separaten Montagehallen für die Erzeugniskomponenten erweitert bzw. vergrößert werden,
▷ gutes Verhältnis von Grundstücksfläche bzw. überbauter Fläche zu Umrißlänge des Montagewerkes.

Zweckmäßige Ausgestaltungen der Erfindung können den Unteransprüchen entnommen werden; im übrigen ist die Erfindung an Hand verschiedener in den Zeichnungen dargestellter Ausführungsbeispiele nachfolgend noch erläutert; dabei zeigen:
- Fig. 1: ein erstes Beispiel für ein Layout eines Montagewerkes mit kreuzförmiger Anordnung der U-förmigen Schleifen der Montagelinie,
- Fig. 2: ein zweites Layout mit T-förmiger Anordnung der Schleifen, wobei ein Paar von Schleifen parallel nebeneinander angeordnet ist,
- Fig. 3: ein drittes Layout mit kreuzförmiger Anordnung der Schleifen, wobei hier im Zentrumsbereich des Kreuzes Abschnitte der Montagelinie tangential und im Abstand zum Zentrum verlegt sind, um Platz im Zentrumsbereich für zentrale Funktionen zu schaffen,
- Fig. 4: eine vergrößerte Seitenansicht auf einen Ausschnitt aus der Montagelinie und

- Fig. 5: eine vergrößerte Grundrißdarstellung eines Ausschnittes aus der Montagelinie.

Die Erfindung betrifft ein Montagewerk für die Serienmontage von Fahrzeugen 1. In einer Hauptmontagehalle 2, 2', 2'' ist eine Hauptmontagelinie 3 untergebracht; mehrere zugehörige Montagebetriebe für zuzuliefernde Fahrzeugkomponenten sind in unmittelbarer Nachbarschaft der Hauptmontagehalle angeordnet. Eine lineare Fördereinrichtung 5, die die Hauptmontagelinie 3 bildet, bewegt eine Reihe von Fahrzeug-Skids 6 - als bodengestützte Fördereinrichtung - oder von Hängeförderern langsam voran. Dabei sind mehrfach paarweise zwei gleichlange Teilstrekken der Fördereinrichtung parallel, also U-förmig bei gegenläufiger Förderrichtung nebeneinander angeordnet und die gesamte Förderstrecke ist so in mehrere U-förmige, aneinander anschließende Förderschleifen 8 unterteilt. An der Anfangsstelle 4 der Montagelinie 3 wird ein Rahmen oder Chassis auf das dort befindliche Skid aufgelegt und an der Endstelle 7' der Fördereinrichtung Montagelinie wird das fast fertig montierte Fahrzeug von dem dort befindlichen Skid weggefahren; durch die restliche Montagestrecke können die Fahrzeuge auf den eigenen Rädern - z.B. durch einen Schleppförderer - weiterbewegt werden. Eine Rückführ-Fördereinrichtung transportiert die leeren Skids 6 von der End- (7') zu der Anfangsstelle 4 der Montagelinie 3 zurück. Größere, komplexere, "just in time" an die Montagelinie 3 zuzuliefernde Fahrzeugkomponenten, beispielsweise Cockpit, Sitze, Vorderachse, Triebwerk, Hinterachse, Türen, Heckklappe, Dach, Integralträger u.dgl., werden in mehreren, separaten Montagehallen örtlich gesondert vormontiert. Montageteile ohne oder mit nur sehr geringen Vormontagebedarf und/oder geringem Raumbedarf je Einzelteil, z.B. Klein- und Normteile sowie Teile mittlerer Größe wie Verkleidungsteile, Windschutzscheibe o.dgl., werden in einem zentralen Teilevorratslager, z.B. in dem Lager 18 für Klein- und Normteile, in Bereitschaft gehalten und von dort an die Montagelinie 3 bedarfsgerecht angeliefert. In der Hauptmontagehalle 2, 2' oder 2'' sind außerdem dezentral mehrere Lager 21 oder 22 für Großteile wie Räder, Stoßfänger o.dgl. jeweils nah am entsprechenden Montageplatz angeordnet. Zwischen jeder der separaten Montagehallen bzw. dem zentralen Teilevorratslager einerseits und der Hauptmontagelinie andererseits sind jeweils Zubringersysteme 23 vorgesehen, um jeweils diejenigen Arbeitsstationen der Montagelinie 3, an der die betreffende Fahrzeugkomponente bzw. ein Einzelteil benötigt werden, logistischen an die dezentralen Teilevorratslager anbinden zu können.

Um das Montagewerk logistisch sowie funktions- und kostenmäßig zu optimieren, sind einzelne U-förmige Förderschleifen 8 der Montagelinie 3 radial von einem Zentrum des Montagewerkes wegorientiert und unter Belassung eines sich trichterartig öffnenden Freiraumes 25 bzw. 25' zwischen benachbarten U-förmigen Förderschleifen 8 angeordnet. Dabei sind die separaten Montagehallen, das zentrale Teilevorratslager sowie dezentrale Vorratslager 21 0der 22 in den Freiräumen 25, 25' zwischen den Förderschleifen 8 in unmittelbarer Nachbarschaft zu der Hauptmontagehalle 2 der Montagelinie 3 untergebracht.

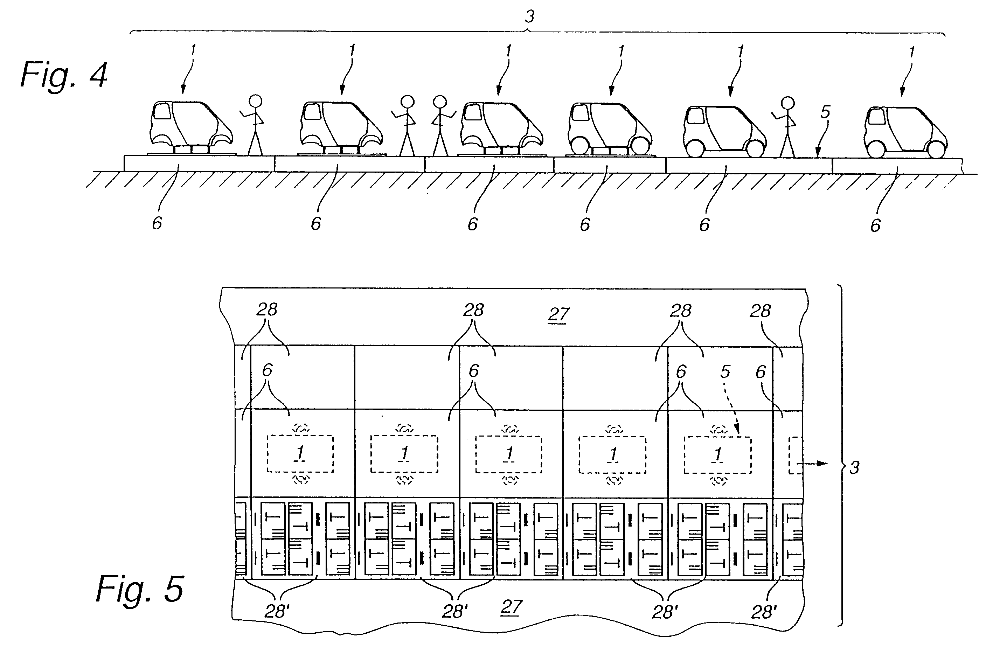

Eine mögliche Ausbildung der Montagelinie zeigen die Figuren 4 und 5. Die entstehenden Fahrzeuge 1 sind auf einem fahrenden Erzeugnisträger, einem sog. Skid 6 aufgestellt, der eine begehbare Plattform für den Werker bildet. Die Skids werden als geschlossener Verbund durch einen zwischen gleich hohen Podesten gebildeten Kanal mittels einer bodengestützten Fördereinrichtung 5 oder durch eine Hängefördertechnik linear voranbewegt, wobei es sich um einen Schubverbund, ein Schleppsystem oder auch einen Selbstantrieb der Skids handeln kann. Sie bilden gemeinsam zumindest abschnittsweise die Montagelinie 3. Im Bereich von Ecken oder Umkehrstellen werden die Skids - durch Eigenantrieb oder durch gesonderte Umsetzförderer - umgesetzt. Auf diese Weise kann ein beliebig gewundener Verlauf der Montagelinie dargestellt werden. Auf den beiderseits des Förderkanals angeordneten Podesten sind Materialstellflächen 28 und 28' für zu montierende Teile geschaffen, wobei auf der einen Seite beispielsweise Kleinteile und auf der anderen Seite sperrigere Teile in größeren Transportgefäßen bereitgestellt werden können.

Beiderseits der Montagelinie sind Fahrstraßen 27 in der Montagehalle für Gabelstapler oder ähnliche Flurfördergeräte vorgesehen.

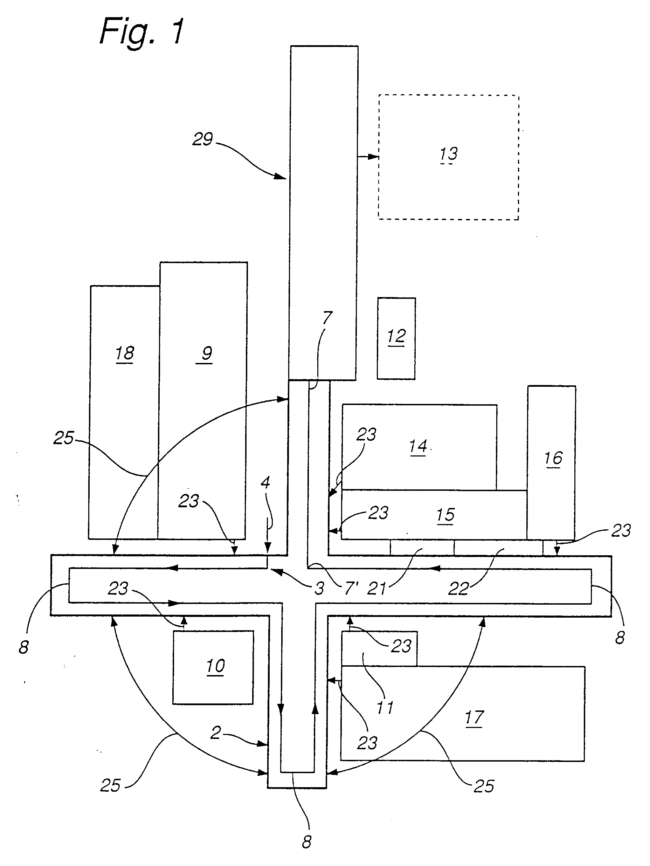

Bei dem in Figur 1 dargestellten Beispiel eines Layouts sind drei Förderschleifen 8 orthogonal zueinander in Form eines Kreuzes angeordnet, so daß auch die zugehörige Hauptmontagehalle 2 einen kreuzförmigen Grundriß aufweist. Es werden drei einzelne Förderschleifen mit jeweils einem 90-Grad-Freiraum dazwischen gebildet, die sich von einem Zentrum aus strahlenförmig wegerstrecken. Innen an der im Bild links dargestellten erste Förderschleife beginnt an der Stelle 4 mit der Anlieferung des sog. Space-Frame's des Fahrzeuges die Montage. Der Space-Frame wird bei den gezeigten Ausführungsbeispielen an einer gesonderten, entfernt gelegenen Fabrikationsstätte hergestellt und taktweise rechtzeitig angeliefert. Es wäre durchaus denkbar, daß er ebenfalls auf dem Gelände des Endmontagewerkes in einer benachbart gelegenen und logistisch unmittelbar angebundenen Halle hergestellt wird, was jedoch hier nicht so vorgesehen ist.

Es sei für die weitere Beschreibung der Montagewerk-Layouts angenommen, daß die Darstellung kartografisch richtig ist, daß also der obere Bildrand nach Norden weist. Somit sind dann nördlich von der ersten, der West-Förderschleife, eine separate Montagehalle 9 für das Cockpit und westlich daneben das Zentrallager 18 für Klein- und Normteile angeordnet. Das Cockpit wird in einem sehr frühen Stadium montiert, weshalb die Cockpit-Montagehalle 9 neben diesem ersten Abschnitt der Montagelinie 3 angeornet wurde. Sie ist unter Belassung eines für eine Fahrstraße ausreichenden Freiraumes 26 neben der Hauptmontagehalle 2 angeordnet. Dieser Freiraum - das gilt selbstvertändlich auch in Bezug auf die anderen, weiter unten noch erwähnten separaten Montagehallen - kann erforderlichenfalls zur Unterbringung einer Fahrstraße oder auch zur Unterbringung eines Geländzaunes, einer Werkssicherungsanlage o. dgl. oder auch für Grünanlagen ausgenutzt werden. Es ist nämlich mit zu berücksichtigen, daß in der Regel die separaten Montagehallen unter jeweils unerschiedlicher Firmenleitung stehen und unterschiedlichen Unternehmen und u.U. sogar anderen Branchen angehören. Abhängig von z.T. landesunterschiedlichen gesetzlichen Bestimmungen dürfen die unterschiedlichen Hallen räumlich unter einem Dach zusammengefaßt sein oder müssen voneinander räumlich getrennt sein. Der erwähnte Abstand 26 zwischen der separaten Montagehalle und der Hauptmontagehalle wird durch ein Zubringersystem 23 logistisch überbrückt, wobei dieses Zubringersystem unterirdisch oder in wenigstens etwa 3 m lichter Durchfahrhöhe oberhalb des Bodens angeordnet ist.

Wegen der Vielfalt der Teile, die in dem Zentralen Lager 18 für Klein- und Normteile gelagert und für die einzelnen Arbeitsstationen bedarfsgerecht kommissioniert werden, ist eine örtlich gezielte, logistische Anbindung des Lagers 18 an die Montagelinie 3 nicht möglich. Vielmehr werden hier die Teile mit gesteuerten Fahrzeugen kistenweise und in einem höchstens für eine Schicht ausreichenden Vorrat den Arbeitsstationen zugebracht. Darüber hinaus können von extern zuzuliefernde Teile auch dadurch bedarfsnah bereitgestellt werden, daß Wechselbrücken-Aufbauten für Nutzfahrzeuge an entsprechenden Rampen bzw. Bereitstellungsplätzen, die nahe an den Montageorten angeordnet sind, aufgestellt und an die Halle angedockt werden.

Auf der Südseite der West-Förderschleife ist die Montagehalle 10 für die Sitze plaziert und örtlich lokal mit einem den Freiraum 26 überbrückenden Zubringersystem 23 an die Montagelinie bzw. die Montagestationen, an denen die Sitze montiert werden, logistisch angebunden. Nach dem der Südabschnitt der West-Förderschleife wieder zu dem zentralen Punkt der Hauptmontagehalle 2 zurückgekehrt ist, wendet sich die Montagelienie nach Süden in eine Süd-Fördeschleife. Neben deren westlichen Abschnitt der Montagelinie ist eine große Montagehalle 17 für einen sog. Integralträger angeordnet. Diese technisch aufwendige Modul umfaßt die komplette Hinterachse einschließlich des darin integrierten Triebwerkblocks. Zu Beginn einer neuen, der Ost-Förderschleife ist auf deren Südseite die wesentlich kleiner Montagehalle 11 für die Vorderachse angeordnet.

Enger geht es in dem nordöstlichen Quadranten zwischen der Ost-Förderschleife und dem nördlich verlaufenden einzelnen Abschnitt der Montagelinie zu. Dort sind drei separate Montagehallen und zwei dezentrale Lager für Großteile angeordnet. Und zwar sind dies
▷ die Montagehalle 16 für die verschiedenen Varianten der Dächer, die auf der Nordseite der Ost-Förderschleife an die Hauptmontagelinie angebunden ist sowie
▷ die Montagehalle 15 für die Heckklappe und die Montagehalle 14 für Türen, die beide an den nördlichen Abschnitt der Montagelinie angekoppelt sind, ferner
▷ ein Lager 21 für Räder und ein weiteres Lager 22 für Stoßfänger, die montageplatznah an der Nordseite der Ost-Förderschleife angeordnet sind.

Am Ende des nördlichen Abschnittes der Montagelinie endet die Montagelinie 3 an der Stelle 7. Die Skid-Beförderung der Fahrzeuge endigt jedoch schon vorher, und zwar am inneren Ende des nördlichen Absdchnittes der Westschleife - Stelle 7'. Dort werden die fertigen Fahrzeuge von den Skids heruntergenommen; sie rollen von da an auf den eigenen Rädern, mittels eines Schlepp- oder Plattenbandförderers bewegt, durch den nach Norden sich erstreckenden Abschnitt der Montagelinie. An deren Ende werden die fertigen Fahrzeuge in die Einfahrabteilung 29 und Endbearbeitung gefahren, von wo die fertigen Fahrzeuge schließlich in die Wagenauslieferung 13 gelangen. Die leeren Skids - im Falle einer Hängefördertechnik die leeren Fördergehänge - werden von der Stelle 7' zum Beginn der Montagelinie 3 an der Stelle 4 zurückbefördert, wozu bei Passiv-Skids eine entsprechende Fördereinrichtung vorgesehen sein muß; bei automatisiert gelenkten, selbstangetriebenen Aktiv-Skids können diese auf einer geschützten Fahstraße selber zurückfahren.

Ein wesentliches Gebäude der Infrastruktur - das Flüssigkeitslager 12 - kann wegen problemloser Zufuhrmöglichkeit der verschiedenen Stoffe wie Öle, Kraftstoffe, Bremsflüssigkeiten, Waschwasser o.dgl. mittels Rohrleitungen weiter abgerückt untergebracht werden.

Das in Figur 1 dargestellte Layout läßt erkennen, daß das Montagewerk und/oder die integrierten Zulieferbetriebe bedarfsweise ohne weiteres erweitert werden können. Ein solcher Erweiterungsbedarf kann sich z.B. durch eine Kapazitätserhöhung ergeben, was regelmäßig zu einer Erhöhung der Montageplätze und somit zu einer Verlängerung der Montagelinie führt. Die kreuzförmige Hauptmontagehalle 2 kann an einem oder mehreren der drei Enden der Förderschleifen verlängert und somit in Stufen ein Ausbau der Kapazität vorgenommen werden. Auch an der Westseite des Nordabschnittes der Montagelinie besteht noch Raum für eine Erweiterungsmöglichkeit; der Beginn 4 der Montagelinie kann unmittelbar neben das Ende 7 verlagert und die Montagelinie so verlängert werden. Die Zulieferbetriebe können ebenfalls, zumindest in einer Richtung, häufig sogar in zwei Richtungen ausgedehnt werden. Die örtliche Lage der logistischen Anbindung der separaten Montagehallen kann ohne große Störung der Hauptmontagehalle verändert werden; nötigenfalls läßt man das Zubringersystem ein Stück weit parallel zur Außenfront der Hauptmontagehalle verlaufen.

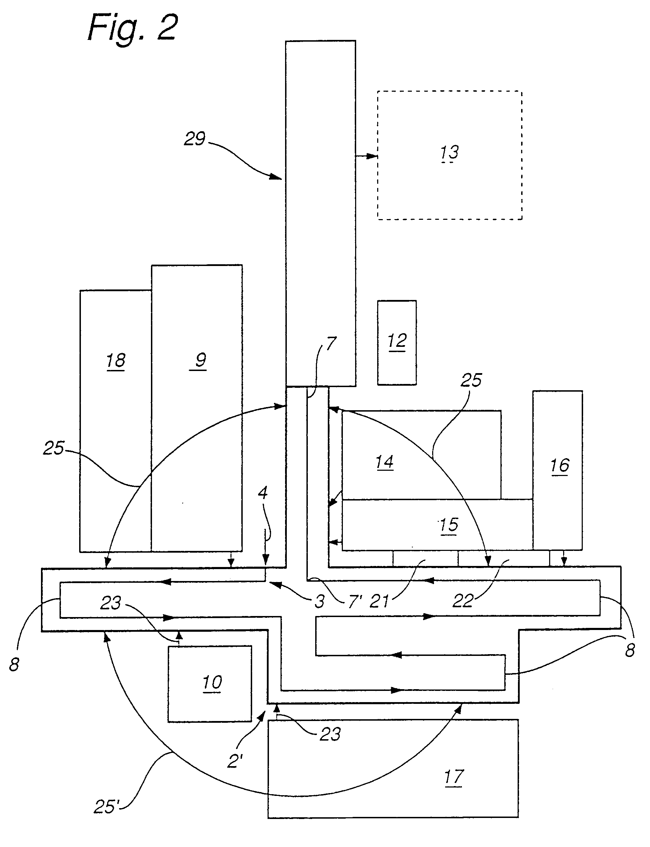

Das in Figur 2 gezeigte Layout unterscheidet sich von dem nach Figur 1 dadurch, daß die U-förmigen Förderschleifen 8 im wesentlivhen T-förmig angeordnet sind, wobei auf der Südseite zwei Förderschleifen parallel zueinander und unmittelbar nebeneinander, also ohne Freiraum dazwischen verlaufen. Die Lage der Montagehalle für die Vorderachse ist hier nicht gesondert dargestellt; sie kann hier beispielsweise mit in der Halle 17 für den Integralträger untergebracht sein. Die logistische Anbindung 23 erfolgt hier von der Innenseite der südlicheren Förderschleife her. Im übrigen stimmt das Layout mit dem nach Figur 1 überein.

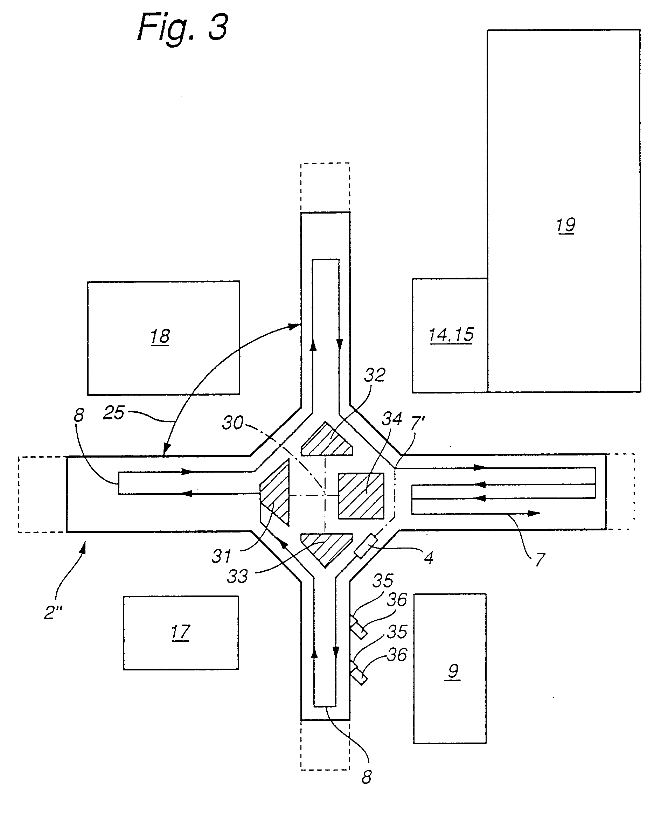

Bei dem dritten Beispiel eines Layout's nach Figur 3 sind die Schleifen 8 ebenfalls kreuzförmig angeordnet, wobei hier jedoch im Zentrumsbereich des Kreuzes die dort verlaufenden Abschnitte der Montagelinie tangential, d.h. etwa rechtwinklig zur Winkelhalbierenden in den Freiräumen 25 und im Abstand zum Zentrumspunkt 30 verlegt sind, um Platz im Zentrumsbereich für zentrale Funktionen zu schaffen. In diesem Zusammenhang seien beispielsweise Büroräume 31 für Meister und Führungs- und Verwaltungskräfte, Schulungsräume 32, Material-Präsentationsräume 33 sowie ein Qualitäts- und Nacharbeitszentrum genannt. In diesem Beispiel sind im Süd-Trakt auch Andockstellen 35 gezeigt, die montageplatz-nah angebracht sind für Teile, die von weiter entfernt liegenden Lieferanten angeliefert werden. Je nach Platzverhältnissen außerhalb der Montagehalle für Rangiertätigkeit der zugehörigen Lkw's können die Andockstellen rechtwinklig oder - vorzugsweise und wie in Figur 3 gezeigt - unter einem spitzen Winkel zur Außenwand der Montagehalle angeordnet sein. An diesen Andockstellen können Wechselcontainer oder Wechselaufbauten 36 für Lastkraftwagen wetterfest angedockt werden, so daß die in den Wechselaufbauten angelieferten Teile bedarfsweise wie aus einem internen Lager entnommen werden können.

Im Ost-Trakt der Montagehalle 2'' sind Abschnitte der Montagelinie vorgesehen, in denen die Fahrzeuge auf den eigenen Rädern rollen und durch einen Schleppförderer voranbewegt werden. Es werden hier insgesamt vier Abschnitte mäanderförmig durchlaufen. Im Norden ist zunächst eine Montagelinie für Heckklappe, Türen und Außenverkleidungsteile angeordnet, welchletztere in der Halle 19 einbaufertig produziert werden. In den drei südlich davon angeordneten Linien finden diverse Prüfungen und Einstellvorgänge wie Motor-Funktions- und Leistungsprüfung, Einstellung von Spur und Sturz u.dgl. statt. Der südlichste Abschnitt ist das sog. Finish-Band, in dem die fertig montierten Fahrzeuge auslieferungsfertig gemacht werden, d.h. es werden Fingertapser o.dgl. von der Lackierung poliert, das Fahrzeuginnere wird gereinigt, die Wagenbegleitpapiere werden geprüft und beigelegt u.v.a. mehr. Von dort werden die Fahrzeuge mit eigener Kraft nach Durchfahren einer Rüttelstrecke zur Wagenauslieferung gefahren.

## Patentansprüche

1. Montagewerk für die Serienmontage industrieller Erzeugnisse, insbesondere von Fahrzeugen (1), mit einer in einer Hauptmontagehalle (2, 2', 2'') untergebrachten Montagelinie (3) und mit mehreren zugehörigen Montagebetrieben (9 - 11, 14 - 17) für zuzuliefernden Fahrzeugkomponenten,
▷ mit einer linearen - bodengestützten oder hängend angeordneten - Fördereinrichtung (5) zum langsamen Voranbewegen einer Reihe von Erzeugnisträgern (6) - nachfolgend kurz "Skids" genannt -, durch welche Fördereinrichtung (5) die Hauptmontagelinie (3) gebildet ist,
▷ wobei mehrfach paarweise zwei gleichlange Teilstrecken der Fördereinrichtung (5) parallel nebeneinander, also U-förmig bei gegenläufiger Förderrichtung angeordnet sind und die gesamte Förderstrecke so in mehrere U-förmige, aneinander anschließende Förderschleifen (8) unterteilt ist,
▷ mit mehreren separaten Montagehallen (9 - 11, 14 - 17) für größere, komplexere, örtlich gesondert vorzumontierendte und "just in time" an die Montagelinie (3) zuzuliefernde Erzeugniskomponenten,
▷ mit einem zentralen Teilevorratslager (18) für Montageteile ohne oder nur sehr geringen Vormontagebedarf und geringem Raumbedarf je Einzelteil sowie mit mehren dezentral in, an oder neben der Hauptmontagehalle (2, 2', 2'') montageplatznah angeordneten Vorratslagern (21) für Großteile,
▷ mit Zubringersystemen (23) zwischen jeder der separaten Montagehallen (9 - 11, 14 - 17) bzw. den dezentralen Vorratslagern (21) einerseits und der Montagelinie (3) andererseits zur logistischen Anbindung der Montagehallen (9 - 11, 14 - 17) bzw. Lager (21) an jeweils diejenige Arbeitsstation der Montagelinie (3), an der die betreffende Erzeugniskomponente bzw. ein Großteil benötigt wird,
**dadurch gekennzeichnet,**
daß einzelne U-förmige Förderschleifen (8) der Montagelinie (3) radial von einem Zentrum des Montagewerkes wegorientiert sind, wobei ein Freiraum (25, 25') zwischen benachbarten U-förmigen Förderschleifen (8) belassen ist, und wobei ferner zumindest ein Teil der separaten Montagehallen (9, 10, 14 bis 17) und das zentrale Teilevorratslager (18) in den Freiräumen (25, 25') zwischen den Förderschleifen (8) in unmittelbarer Nachbarschaft zu der Hauptmontagehalle (2, 2', 2'') der Montagelinie (3) untergebracht sind.

2. Montagewerk nach Anspruch 1,
**dadurch gekennzeichnet,**
daß die Förderschleifen (8), soweit sie unter Belassung eines Freiraumes (25, 25') zueinander angeordnet sind, orthogonal zueinander angeordnet sind.

3. Montagewerk nach Anspruch 1,
**dadurch gekennzeichnet,**
daß die separaten Montagehallen (9, 10, 14 bis 17), sofern sie in unmittelbarer Nachbarschaft zu der Hauptmontagehalle (2, 2', 2'') untergebracht sind, unter Belassung eines für eine Fahrstraße ausreichenden Freiraumes (26) neben der Hauptmontagehalle (2, 2', 2'') angeordnet sind.

4. Montagewerk nach Anspruch 1,
**dadurch gekennzeichnet,**
daß die Förderschleifen (8) in Form eines Kreuzes oder T-förmig angeordnet sind.

5. Montagewerk nach Anspruch 1,
**dadurch gekennzeichnet,**
daß die Förderschleifen (8) L-förmig angeordnet sind.

6. Montagewerk nach Anspruch 3,
**dadurch gekennzeichnet,**
daß von den Förderschleifen (8) einige parallel zueinander und unmittelbar nebeneinander angeordnet sind.

7. Montagewerk nach Anspruch 1,
**dadurch gekennzeichnet,**
daß im Zentrumsbereich des Montagewerkes Abschnitte der Montagelinie tangential und im Abstand zum Zentrumspunkt (30) verlegt sind, um Platz im Zentrumsbereich für zentrale Funktionen (31 bis 34) zu schaffen.

8. Montagewerk nach Anspruch 1,
**dadurch gekennzeichnet,**
daß in der Außenwand der Montagehalle (2, 2', 2'') montageplatznah Andockstellen (35) zum wetterfesten Angedocken von Wechselaufbauten (36) für Lastkraftwagen angebracht sind.

9. Montagewerk nach Anspruch 1,
**dadurch gekennzeichnet,**
daß die Zubringersysteme (23), welche die separaten, unter Belassung eines für eine Fahrstraße ausreichenden Freiraumes (26) neben der Hauptmontagehalle (2, 2', 2'') angeordneten Montagehallen (9, 10, 14 bis 17) logistisch mit der Montagelinie (3) der Hauptmontagehalle verbinden, unterirdisch oder in wenigstens etwa 3 m lichter Durchfahrhöhe oberhalb des Bodens angeordnet sind.

## Claims

1. Assembly plant for the series assembly of industrial products, especially vehicles (1), with an assembly line (3) accommodated in a main assembly shop (2, 2', 2'') and with a plurality of associated assembly works (9-11, 14-17) for vehicle parts to be supplied
▷ with a linear - floor-supported or overhead - conveying device (5) for slowly moving forwards a series of product carriers (6) - referred to below as "skids" for short - by means of which conveying device (5) the main assembly line (3) is formed,
▷ a plurality of pairs each comprising two equal part-lengths of the conveying device (5) being arranged parallel and adjacent to one another, i.e. in a U shape with opposing conveying directions, and the overall conveying line thus being divided into a plurality of mutually adjoining conveying loops (8),
▷ with a plurality of separate assembly shops (9-11, 14-17) for relatively large and relatively complex product parts which are to be preassembled at separate locations and supplied to the assembly line (3) "just in time",
▷ with a central component store (18) for assembly components requiring little or no preassembly and taking up little space for each individual component, and with a plurality of stores (21) for large components, arranged non-centrally in, at or next to the main assembly shop (2, 2', 2'') near to the assembly point,
▷ with feeder systems (23) between each of the separate assembly shops (9-11, 14-17) and the non-central stores (21), on the one hand, and the assembly line (3), on the other, for the purpose of linking the assembly shops (9-11, 14-17) or stores (21) logistically to the respective workstations along the assembly line (3) at which the relevant product part or a large component is required,
characterized in that individual U-shaped conveying loops (8) of the assembly line (3) are directed radially away from a centre of the assembly plant, a free space (25, 25') being left between adjacent U-shaped conveying loops (8), and furthermore at least some of the separate assembly shops (9, 10, 14 to 17) and the central component store (18) being accommodated in the free spaces (25, 25') between the conveying loops (8) in immediate proximity to the main assembly shop (2, 2', 2'') of the assembly line (3).

2. Assembly plant according to Claim 1, characterized in that, insofar as they are arranged so as to leave a free space (25, 25') relative to one another, the conveying loops (8) are arranged orthogonally relative to one another.

3. Assembly plant according to Claim 1, characterized in that, insofar as they are accommodated in immediate proximity to the main assembly shop (2, 2', 2''), the separate assembly shops (9, 10, 14 to 17) are arranged next to the main assembly shop (2, 2', 2'') so as to leave a free space (26) sufficient for an access road.

4. Assembly plant according to Claim 1, characterized in that the conveying loops (8) are arranged in the form of a cross or in a T shape.

5. Assembly plant according to Claim 1, characterized in that the conveying loops (8) are arranged in an L shape.

6. Assembly plant according to Claim 3, characterized in that some of the conveying loops (8) are arranged parallel to one another and directly adjacent to one another.

7. Assembly plant according to Claim 1, characterized in that, in the central area of the assembly plant, sections of the assembly line are laid tangentially and at a distance from the centre (30) in order to create space in the central area for central functions (31 to 34).

8. Assembly plant according to Claim 1, characterized in that docking points (35) for the weatherproof docking of interchangeable bodies (36) for lorries are made in the outer wall of the assembly shop (2, 2', 2'') near to the assembly point.

9. Assembly plant according to Claim 1, characterized in that the feeder systems (23) which logistically connect the separate assembly shops (9, 10, 14 to 17) - the latter being arranged next to the main assembly shop (2, 2', 2'') so as to leave a free space (26) sufficient for an access road - to the assembly line (3) of the main assembly shop are arranged underground or above ground with a clearance of at least approximately 3 m for vehicles to be driven through.

## Revendications

1. Installation de montage pour le montage de produits industriels, notamment de véhicules (1), comportant une chaîne de montage (3) disposée dans un hall principal de montage (2, 2', 2'') et comportant plusieurs postes de montage associés (9 - 11, 14 - 17) pour des composants des véhicules, devant être amenés,
◆ comportant un dispositif de convoyage linéaire (5) - disposé au sol ou suspendu - pour faire avancer lentement une série de supports (6) de produits - désignés ci-après de façon abrégée par "skids" -, dispositif de convoyage (5) par lequel est formée la chaîne principale de montage,
◆ deux sections partielles de même longueur du dispositif de convoyage (5) étant disposées par couple parallèlement entre elles et côte-à-côte en plusieurs endroits, c'est-à-dire en forme de U dans le cas d'un sens opposé de convoyage et l'ensemble de la section de convoyage étant ainsi subdivisé en plusieurs boucles de convoyage (8) en forme de U, qui se raccordent mutuellement,
◆ comportant plusieurs halls de montage séparés (9 - 11, 14 - 17) pour des composants de produits, qui sont plus grands, plus complexes, doivent être prémontés en un lieu séparé et doivent être amenés "juste à temps" a la chaîne de montage (3),
◆ comportant un magasin central (18) de stockage de pièces de montage ne nécessitant aucun prémontage ou seulement un prémontage très réduit et nécessitant un faible encombrement pour chaque pièce individuelle, ainsi que plusieurs magasins de stockage (21) pour des grandes pièces, qui sont disposés d'une manière décentralisée dans, près ou à côté du hall principal de montage (2, 2', 2'') à proximité des emplacements de montage,
◆ comportent des systèmes d'amenée (23) disposés entre chacun des halls de montage séparés (9 - 11, 14 - 17) ou des magasins de stockage décentralisés (21) d'une part et la chaîne de montage (3) d'autre part pour la liaison logistique des halls de montage (9 - 11, 14 - 17) ou des magasins (21) au poste de travail respectif de la chaîne de montage (3), au niveau duquel le composant considéré du produit ou une grande pièce est nécessaire,
caractérisée en ce
que des boucles de convoyage individuelles (8) en forme de U de la chaîne de montage (3) sont orientées de manière à s'étendre radialement à partir d'un centre de l'installation de montage, auquel cas un espace libre (25, 25') subsiste entre des boucles de convoyage voisines (8) en forme de U, et auquel cas en outre au moins une partie des halls de montage séparés (9, 10, 14 à 17) et le magasin central (18) de stockage des pièces sont logés dans les espaces libres (25, 25') entre les boucles de convoyage (8) au voisinage direct du hall principal de montage (2, 2', 2'') de la chaîne de montage (3).

2. Installation de montage selon la revendication 1, caractérisée en ce que, dans la mesure où elles sont disposées les unes par rapport aux autres en laissant subsister un espace libre (25, 25'), les boucles de convoyage (8) sont disposées perpendiculairement entre elles.

3. Installation de montage selon la revendication 1, caractérisée en ce que, dans la mesure où ils sont placés au voisinage direct du hall principal de montage (2, 2', 2''), les halls séparés de montage (9, 10, 14 à 17) sont disposés a côté du hall principal de montage (2, 2', 2'') en laissant subsister un espace libre (26) suffisant pour une voie de déplacement.

4. Installation de montage selon la revendication 1, caractérisée en ce que les boucles de convoyage (8) sont disposées sous la forme d'une croix ou en forme de T.

5. Installation de montage selon la revendication 1, caractérisée en ce que les boucles de convoyage (8) sont disposées en forme de L.

6. Installation de montage selon la revendication 1, caractérisée en ce que quelquesunes des boucles de convoyage (8) sont disposées en étant parallèles entre elles et directement côte-à-côte.

7. Installation de montage selon la revendication 1, caractérisée en ce que dans la partie centrale de l'installation de montage, des parties de la chaîne de montage sont disposées tangentiellement et à distance du centre (30) de manière à créer de la place dans la zone centrale pour des fonctions centrales (31 à 34).

8. Installation de montage selon la revendication 1, caractérisée en ce que dans la paroi extérieure des halls de montage (2, 2', 2'') sont disposés, à proximité des emplacements de montage, des emplacements d'arrimage (35) pour arrimer, d'une manière résistant aux intempéries, des caisses interchangeables (36) pour des camions.

9. Installation de montage selon la revendication 1, caractérisée en ce que les systèmes d'amenée (23), qui relient d'une manière logistique les halls de montage séparés (9, 10, 14 à 17), qui sont disposés à côté du hall principal de montage (2, 2', 2'') en laissant subsister un espace libre (26) suffisant pour une voie carrossable, à la chaîne de montage (3) du hall principal de montage, sont disposés en souterrain ou au-dessus du sol en laissant subsister une hauteur libre de passage d'environ 3 m.
